# EUROPEAN PATENT APPLICATION

(11) **EP 2 600 131 A1**
(43) Veröffentlichungstag der Anmeldung: **05.06.2013**
(21) Anmeldenummer: 10855403.1
(22) Anmeldetag: 28.07.2010
(51) Int. Cl.: G01M 7/02, G06T 17/00

(54) **VERFAHREN ZUR REKONSTRUKTION VON MULTIPARAMETERMODELLEN VON SCHWINGUNGEN MECHANISCHER SYSTEME**

(71) Anmelder: SPERANSKIY ANATOLY ALEKSEEVICH, Moscow 105082 (RU)
(72) Erfinder: PROKHOROV, Alexander Igorevich, Moscow 115304 (RU)
(74) Vertreter: Jeck, Anton
(86) Internationale Anmeldenummer: PCT/RU2010/000419
(87) Internationale Veröffentlichungsnummer: WO 2012/015326

(57) **Zusammenfassung**

Die Erfindung bezieht sich auf die Erforschung von Schwingungsprozessen von elastischen mechanischen Systemen. Das technische Ergebnis der vorgeschlagenen Erfindung ist die Erzeugung von Spektren von multidimensionalen Abbildern, welche die zeitlich gekoppelten dreidimensionalen Vektorparameter der metrologischen und/oder analytisch-rechnerischen und/oder Sollparameter der Schwingungen der mechanischen Systeme anzeigen. Die in verschiedenen Kombinationen integrierten rekonstruierten Abbilder verschiedener Dimensionen können je nach Zielfunktion als homöostatisches Bild oder kybernetisches Muster (Abbild) der Schwingungsprozesse in den mechanischen Systemen angewendet werden, um die aktuellen Betriebszustände in Echtzeit objektiv einzuschätzen. Die Erfindung kann daher zur Erhöhung des Nutzeffekts bei der Überwachung und Untersuchung der Schwingungsprozesse von mechanischen Systemen (Objekten) im Maschinenbau, im Bauwesen, in der Akustik usw. angewendet werden.

## Beschreibung

Die Erfindung betrifft ein Verfahren zur Rekonstruktion von Schwingungsprozessabbildern mechanischer Systeme nach dem Oberbegriff des Anspruchs 1.

Die Erfindung ist bei der Erforschung von Schwingungsprozessen von elastischen mechanischen Systemen im Maschinenbau, im Bauwesen, in der Akustik usw. einsetzbar.

Die Patente RU 2194971, US 5602761, US 6763312, US 7225109 beschreiben bekannte Verfahren zur Überwachung von Maschinen und Bauwerken während ihres Betriebs oder bei Versuchen. Die bekannten Verfahren setzen eine Messung von Schwingungskenndaten der Maschinen oder Bauten mittels Vibrationsbeschleunigungssensoren zur Analyse der Parameter bei der Verformung des Elements eines Objekts an der Einbauposition des Sensors ein.

Der Mangel dieser bekannten Verfahren ist der Einsatz von Vibrationsbeschleunigungssensoren. Diese Sensoren messen nur die Teilbeschleunigung um die Messachse des Sensors und ermöglichen es nicht, die Größe und Richtung des Deformationsvektors (Schwingungsamplitude und ihre Ableitungen) festzustellen.

Der nächstkommende Stand der Technik gegenüber der vorgeschlagenen Erfindung ist ein Verfahren zur Überwachung von Maschinen und Bauwerken (RU 2371691 vom 22.04.2008). Dieses Verfahren umfasst eine Messung von Schwingungskenndaten eines Objekts mittels wenigstens eines Beschleunigungssensors, eine Bestimmung und insbesondere eine Berechnung und Auswertung von Schwingungsparametern des Elements eines zu überwachenden Objekts an der Einbauposition des Sensors. Dabei ist ein Sensor eingesetzt, welcher gleichzeitig drei orthogonale Projektionen des Beschleunigungsvektors misst. Dabei wird der Deformationsvektor (Wert und Richtung) des zu überwachenden Objekts an der Einbauposition des Sensors bestimmt. Das Array von Deformationsvektoren wird in zeitlicher Folge gespeichert. Die räumliche zeitliche Geschwindigkeitskurve (Hodograph) des Deformationsvektors wird auf dem Bildschirm für wenigstens eine Schwingungsfrequenz in Bezug auf das Koordinatensystem angezeigt. Das Koordinatensystem ist mit dem zu überwachenden Objekt verbunden. Anhand der Form der Geschwindigkeitskurve wird das Vorhandensein von Anisotropie bei den Objektdeformationen an der Einbauposition des Sensors festgestellt.

Dieses bekannte Verfahren hat den Mangel, dass es keine Rekonstruktion der zeitlich miteinander zusammenhängenden multidimensionalen Abbildern von metrologischen und analytisch-rechnerischen Spektralparametern der Schwingungsprozesse in mechanischen Systemen ermöglicht.

Um die Möglichkeiten für eine wesentliche Erhöhung der Aussagefähigkeit der Messungen von Schwingungsprozessen in mechanischen Systemen durch die Anwendung von Vektor-Schwingungs-Beschleunigungsmessgeräten und 3D-mechanischen Schwingungsempfängern wirkungsvoll zu nutzen, sollten multidimensionale systemmäßig zusammenhängende parametrische Spektralabbilder von Diagnoseparametern der Schwingungsprozesse generiert werden. Diese Schwingungsprozesse sind dem physikalischen Wesen und den grundsätzlichen Gesetzmäßigkeiten der zu erforschenden und zu steuernden Naturprozessen und -erscheinungen adäquat.

Es ist Aufgabe der Erfindung, den Nutzeffekt bei einer Untersuchung und Zustandsbewertung der Schwingungsprozesse in mechanischen Systemen zu erhöhen.

Die gestellte technische Aufgabe wird durch die Merkmale des Anspruchs 1 gelöst.

Der technische Effekt der Erfindung ist die Erzeugung von systemmäßig zusammenhängenden mehrparametrischen gestaffelten und hierarchisch eingerichteten kybernetischen (sowohl oberflächlichen als auch dreidimensionalen) Schwingungsprozessabbildern von mechanischen Systemen.

Das erfindungsgemäße Verfahren umfasst:
- die Erzeugung von zahlreichen dreidimensionalen elliptischen Abbildern (Hodographen) der Vektoren von linearen Vibrationsbeschleunigungen und/oder Vibrationsgeschwindigkeiten und/oder Schwingungsamplituden an den Einbaupositionen (Messpunkten) von Vektorsensoren (3D-Empfängern). Diese Erzeugung der Abbilder erfolgt aufgrund der gleichzeitig gemessenen, räumlichen dynamischen (zeitvariablen) Komponenten der Vektoren von Diagnoseparametern,
- die Speicherung von Spektralsätzen der messbaren und rechnerischen, darunter approximierbaren, vektoriellen und skalaren Größen innerhalb des gewählten Frequenzbereichs der mechanischen Schwingungen,
- die Auftragung der gemessenen und berechneten Diagnoseparameter an den Messpunkten auf das 3D-Modell des zu überwachenden oder des zu untersuchenden Objekts,
- die Darstellung der Spektren von räumlichen elliptischen Hodographen der zeitvariablen Deformationsvektoren in Form einer 3D-Rekonstruktion und
- die Bestimmung des Deformationsvektors der Parameter der äußeren Lastgrößen, ihrer gegenseitigen Anordnung in Bezug auf Messpunkte sowie der unter Spannung verformten Zustände anhand des Größenverhältnisses und der Achsenrichtung des elliptischen Hodographen.

Die metrologischen und berechneten Vektorparameter sind physikalisch miteinander tensoriell gegenseitig verbunden. Dabei handelt es sich um wesentliche und systemmäßige Vektorparameter, die eine stabile Gesamtheit der Merkmale bilden, um die dynamische Homöostase des zu untersuchenden Objekts darzustellen, die der physischen Umwelt entspricht. Das integrale Abbild der Rekonstruktion der Schwingungsprozesse des Objekts kann während der nachfolgenden Überwachung und Steuerung des Objekts angewendet werden.

Das technische Ergebnis ist die Erzeugung der Spektren der multidimensionalen Abbilder. Diese Abbilder stellen zeitlich gekoppelte dreidimensionale Vektorparameter der metrologischen und/oder analytisch-rechnerischen und/oder Sollparameter der Schwingungen der mechanischen Systeme dar. Die rekonstruierten Abbilder verschiedener Dimensionen sind in verschiedenen Kombinationen integriert. Diese Abbilder können je nach der Zielfunktion als homöostatisches Bild oder kybernetisches Muster (Abbild) der Schwingungsprozesse in den mechanischen Systemen angewendet werden, um die aktuellen Betriebszustände in Echtzeit objektiv einzuschätzen.

Das genannte technische Ergebnis wird im vorgeschlagenen Verfahren zur Rekonstruktion der Schwingungsprozessabbilder wie folgt erreicht: Die Einrichtung zur Ausführung des Verfahrens enthält eine Einheit für Raum-Zeit-Messungen, eine Einheit zur Synchronisation der Umwandlung von Raum-Zeit-Messungen, eine digitale Speichereinheit, eine Einheit zur Spektralverarbeitung der gemessenen Vektorparameter, eine Einheit zur Rekonstruktion der Messparameter, eine Einheit der normierten Ebenen der tensoriellen Umwandlung, eine Einheit der berechneten Diagnoseparameter der mechanischen Schwingungen, eine Einheit zur Rekonstruktion des 3D-Modells des Objekts, eine Einheit zur Rekonstruktion der mehrparametrischen Schwingungsprozessabbilder, eine Visualisierungseinheit für rekonstruierbare Parameter, eine Dokumentationseinheit und eine Einheit zur Gestaltung der systemgestützten Wechselwirkung aller Einheiten.

Der Vergleich des nächstkommenden Stands der Technik und des erfindungsgemäßen Verfahrens zeigt:

Aus dem Vergleich des nächstkommenden Stands der Technik mit der Erfindung gehen folgende gemeinsame wesentliche Merkmale hervor: Beide Verfahren umfassen Messabläufe zur Messung der Schwingungsparameter der mechanischen Systeme im vorgegebenen Frequenzbereich mithilfe des 3D-Empfängers für mechanische Schwingungen und die Bestimmung des Hodographen des Deformationsvektors des Elements des zu überwachenden oder zu untersuchenden Objekts an der Einbauposition des Empfängers. Kennzeichnende wesentliche Merkmale des vorgeschlagenen Verfahrens sind: Das vorgeschlagene Verfahren umfasst Prozesse zur Erzeugung eines 3D-Modell-Untersuchungsobjekts, die Anzeige der messbaren und physikalisch damit zusammenhängenden berechneten Vektorgrößen der Schwingungsprozesse an diesem Modell, die Bestimmung der Verteilung der Kreiskenndaten für rekonstruierbare Parameter mit 3D-Approximation der in vorgegebenen diskreten Punkten laufend gemessenen Elemente des zu untersuchenden Objekts auf diesem Modell, die Erzeugung von graphischen Schnitten der Kreiskenndaten für rekonstruierbare Parameter, die Auswahl der Parameter-Ränder und Lokalzonen gemäß den vorgegebenen Kriterien. Dies ermöglicht es, mehrparametrische kybernetische Abbilder der Schwingungszustände der zu untersuchenden Objekte der mechanischen Systeme zu erzeugen.

Die Erfinder haben keine Nachweise über die Anwendung des gleichen Verfahrens mit dem gleichen Bestimmungszweck finden können, somit ist die Erfindung neu.

Den Erfindern sind keine technischen Lösungen bekannt, welche die identischen kennzeichnenden Merkmale des angemeldeten Verfahrens haben. Somit sind die Erfinder der Meinung, dass diese technische Lösung auf einer erfinderischen Tätigkeit beruht.

Die Erfindung kann weit angewendet werden, um den Nutzeffekt der Überwachung und der Untersuchung der Schwingungsprozesse der mechanischen Systeme (Objekte) im Maschinenbau, im Bauwesen, in der Akustik usw. zu erhöhen. Die Erfindung ist daher gewerblich anwendbar.

Die Erfindung wird anhand der Zeichnungen näher erläutert. Es zeigen:

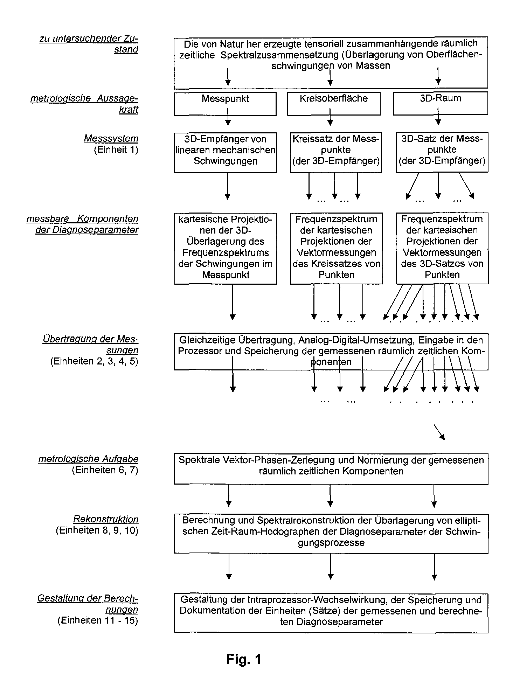

Fig. 1 eine schematische Darstellung der Struktur zur Messung und Bildung von Diagnoseparametern der mechanischen Schwingungen und
Fig. 2 das Blockschaubild der Einrichtung zur Rekonstruktion von mehrparametrischen Schwingungsprozessabbildern der mechanischen Systeme.

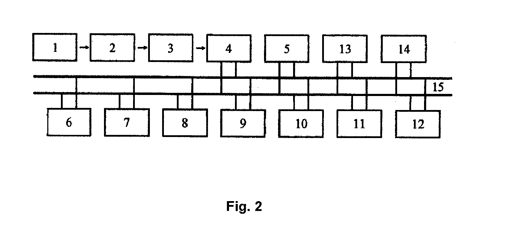

In der Fig. 2 zeigen:
1 - einen 3D-Empfänger für mechanischen Schwingungen,
2 - Dreikanaleinheiten zur synchronen Verstärkung und Umwandlung der Ladung,
3 - eine Einrichtung zur gleichzeitigen Übertragung der Messkomponenten der Parameter von mechanischen Schwingungen,
4 - eine Einrichtung zur gleichzeitigen Analog-Digital-Umsetzung und Eingabe der Komponenten der Parameter der mechanischen Schwingungen in den Prozessor,
5 - eine Einheit des digitalen Speichers für Messkomponenten der Parameter der mechanischen Schwingungen,
6 - eine Einheit zur Spektralverarbeitung der Messkomponenten der Parameter der mechanischen Schwingungen,
7 - eine Einheit von normierten Ebenen für tensorielle Umwandlung,
8 - eine Einheit zur Spektralrekonstruktion der elliptischen Hodographen der räumlich-zeitlichen Diagnoseparameter in Messpunkten,
9 - eine Einheit zur Rekonstruktion des 3D-Modells des Objekts und eine Einheit zur Rekonstruktion von mehrparametrischen Schwingungsprozessabbildern,
10 - eine Einheit zur Rekonstruktion von mehrparametrischen Schwingungsprozessabbildern,
11 - eine Visualisierungseinheit für Diagnoseparameter,
12 - eine Dokumentationseinheit,
13 - eine Einheit für Synchronisation der Umwandlung von Raum-Zeit-Messungen,
14 - eine Einheit zur Gestaltung der systemgestützten Wechselwirkung aller Einheiten sowie
15 - Busleitungen für die Datenübertragung und Steuerung.

Das Verfahren zur Rekonstruktion von mehrparametrischen Schwingungsprozessabbildern mechanischer Systeme wird wie folgt ausgeführt:

Die Wellenschwingungen werden durch äußere Lastgrößen in Form von wirkenden Kräften und Momenten oder durch innere Materialfehler der Konstruktion erzeugt. Das Spektrum der Wellenschwingungen breitet sich über die Kreisoberfläche und den Umfang des zu überwachenden oder zu untersuchenden Objekts aus und wirkt dabei auf die Aufnehmer von 3D-Empfängern für mechanische Schwingungen. Diese 3D-Empfänger sind an den Messpunkten der Kreisoberfläche des Objekts angeordnet. Eine metrologische Einrichtung führt die tensorielle Rückumwandlung des darauf einwirkenden Deformationsspektrums und die Raum-Zeit-Messung der Komponentenüberlagerung der Spektren von metrologischen Parametern im kartesischen Koordinatensystem des 3D-Empfängers aus. Die gemessenen analogen Parameter werden gleichzeitig digitalisiert und in den digitalen Speicher zur Spektralverarbeitung (Filterung) und Vektor-Phasen-Rekonstruktion der Sätze von elliptischen metrologischen Parametern eingelesen. Um die Linearität der zusammenhängenden metrologischen und berechneten Diagnoseparameter aufrechtzuerhalten, müssen die Messungen in Bezug auf Maximalwerte (Grenzwerte) normiert werden. Diese Grenzwerte werden durch technische Daten der metrologischen Einrichtungen sowie durch Berechnungskoeffizienten der Umwandlung der physikalischen Größen festgelegt.

Die multidimensionale zusammenhängende räumlich zeitliche Menge der erforderlichen metrologischen Berechnungsparameter der Schwingungsprozesse ist das Wesen des kybernetischen Abbilds eines Objekts. Sie bestimmt, inwieweit das Abbild dem von Natur her erzeugten Spektrum der mechanischen Schwingungen angemessen ist / entspricht. Danach werden je nach der jeweiligen Aufgabe die aktuelle Werte der Diagnoseparameter aufgrund der räumlichen Messungen berechnet. Mithilfe dieser Diagnoseparameter kann der systemmäßige dynamische Zustand (Homöostase) des Objekts beurteilt werden. Graphische Vektor-Phasen-Abbilder, darunter auch elliptische und skalare Abbilder, des Objekts werden in den Visualisierungs-und Dokumentationseinheiten für rekonstruierbare Parameter gebildet. Diese Abbilder ermöglichen es, den aktuellen homöostatischen Objektzustand auszuwerten und wirkungsvoll zu diagnostizieren. Die Zuverlässigkeit des kybernetischen Objektabbilds wird durch die gleichzeitige systemgestützte Wechselwirkung aller Einheiten aufrechterhalten, die die Menge von metrologischen berechneten Parametern der Schwingungsprozesse herausbilden, verarbeiten, speichern und anzeigen.

## Patentansprüche

1. Verfahren zur Rekonstruktion von mehrparametrischen Schwingungsprozessabbildern mechanischer Systeme mit folgenden Prozessschritten:
- eine Messung der Schwingungsparameter der mechanischen Systeme im vorgegebenen Frequenzbereich mit Hilfe eines 3D-Empfängers für mechanische Schwingungen und
- eine Bestimmung des Deformationsvektors eines Elements des zu untersuchenden Objekts an der Einbauposition des Empfängers,
**dadurch gekennzeichnet, dass** es weiterhin folgende Prozessschritte einschließt:
- eine Erzeugung eines 3D-Modells des zu untersuchenden Objekts,
- eine Darstellung des Spektrums von messbaren und physikalisch damit zusammenhängenden berechneten vektoriellen und skalaren Parametern der Schwingungsprozesse auf diesem Modell,
- eine Bildung von Kreiskenndaten für rekonstruierbare Parameter,
- eine 3D-Approximation der laufend gemessenen Parameter in den vorgegebenen diskreten Punkten der Elemente des zu untersuchenden Objekts,
- eine Erzeugung von graphischen Schnitten der Kreiskenndaten für rekonstruierbare Parameter und
- eine graphische Auswahl (Hervorhebung) von lokalen Zonen und Rändern der Diagnoseparameter anhand der vorgegebenen Kriterien, um mehrparametrische kybernetische Abbilder der Schwingungsprozesse der zu untersuchenden Objekte der mechanischen Systeme zu erzeugen.
